# EUROPÄISCHE PATENTANMELDUNG

(11) **EP 4 386 346 A1**
(43) Veröffentlichungstag der Anmeldung: **19.06.2024**
(21) Anmeldenummer: 23215108.4
(22) Anmeldetag: 07.12.2023
(51) Int. Cl.: G01L 1/16, G01L 1/26, G06F 3/00

(54) **VERFAHREN UND VORRICHTUNG ZUR MESSUNG EINER KRAFTEINWIRKUNG**

(30) Priorität: 14.12.2022 DE 102022213585
(71) Anmelder: Continental Automotive Technologies GmbH, 30175 Hannover (DE)
(72) Erfinder: Beilker, Dirk, 30175 Hannover (DE)
(74) Vertreter: Continental Corporation

(57) **Zusammenfassung**

Die vorliegende Erfindung betrifft ein Verfahren und eine Vorrichtung zur Messung einer Krafteinwirkung. Die Erfindung betrifft zudem ein Eingabegerät, das eine solche Vorrichtung oder ein solches Verfahren nutzt. In einem ersten Schritt wird eine aus einer Krafteinwirkung resultierende Ausgangsspannung eines Kraftsensors erfasst (S1). Diese Ausgangsspannung kann zunächst einer Verstärkung unterzogen werden (S2). Die Ausgangsspannung wird integriert (S3), solange die Ausgangsspannung außerhalb von definierten Schwellenwerten liegt. Zu diesem Zweck können die Ausgangsspannung abgetastet (S31) und die Abtastwerte summiert werden (S32). Durch Auswerten des Integrals der Ausgangsspannung kann schließlich eine Nutzereingabe bestimmt werden (S4).

## Beschreibung

Die vorliegende Erfindung betrifft ein Verfahren und eine Vorrichtung zur Messung einer Krafteinwirkung. Die Erfindung betrifft zudem ein Eingabegerät, das eine solche Vorrichtung oder ein solches Verfahren nutzt.

Zur Realisierung von Eingabegeräten mit aktivem haptischen Feedback ist die Bestimmung der Betätigungskraft während des Betätigungsvorgangs von Vorteil und oftmals auch gefordert. Ein Betätigungsvorgang ist stets dynamisch und besteht üblicherweise aus den Phasen Berühren, Drücken (bei Tasten), Verharren (bei Schiebereglern), Entspannen und Loslassen.

Zur Kraftmessung sind bereits verschiedene Verfahren, basierend z.B. auf einer Wegmessung oder einer Dehnungsmessung, und Sensoren realisiert und im Gebrauch. Bei den Sensoren seien beispielhaft optische, akustische, kapazitive, induktive, piezoresistive, piezoelektrische, induktive oder auf Dehnungsmessstreifen basierende Sensoren genannt.

Die üblichen Verfahren und Sensoren werden oftmals den Anforderungen von Herstellern im Automobilbereich nicht gerecht, so dass sie in diesem Umfeld nicht oder nur bedingt einsetzbar sind. Die Anforderungen betreffen dabei beispielsweise die Empfindlichkeit, den benötigten Bauraum, den Preis, die Skalierbarkeit, die Schnelligkeit, sowie die Unempfindlichkeit gegenüber mechanischen Störeinflüssen und Fertigungstoleranzen. Problematisch ist insbesondere das meist sehr kostenintensive mechanische und elektronische Konzept.

Eine Sensierung einer Krafteinwirkung, die beinahe ohne eine mechanische Verformung auskommt, kann mittels eines piezoelektrischen Sensors erfolgen.

Piezoelektrische Sensoren basieren auf dem Prinzip der elektrischen Ladungsverschiebung bei mechanischer Verformung. Sie haben einen sehr hohen Innenwiederstand. Die Messung der Ladungsmenge stellt je nach Anforderung eine gewisse Herausforderung dar, da eine Messanordnung in der Regel einen Ladungsausgleich bewirkt. Zudem erfolgt die Änderung der Messgröße des piezoelektrischen Sensors sehr schnell, so dass die Auswertung mit einer hochpräzisen Elektronik erfolgen muss.

Piezoelektrische Sensoren werden oftmals mit integrierten Ladungsverstärkern verschaltet. Durch eine Krafteinwirkung auf das Piezoelement wird eine der Kraft proportionale elektrische Ladungsmenge erzeugt. Diese Ladungsmenge wird durch eine Integratorschaltung in eine Spannung umgewandelt. Idealerweise liefert die analoge Elektronik als Ausgangswert einen statischen Wert proportional zur Dehnung.

Vor diesem Hintergrund beschreibt EP 0 253 016 A1 eine Ladungsverstärkerschaltung, z.B. für einen piezoelektrischen Messgeber. Die Ladungsverstärkerschaltung weist einen Operationsverstärker mit einem Integrationskondensator zwischen seinem invertierenden Eingang und seinem Ausgang auf sowie eine Rückstelleinrichtung mit einem in der Rückstellphase geschlossenen Schalter für die Entladung des Integrationskondensators.

Allerdings sind Ladungsverstärkerschaltungen eine prinzipiell eher teure bzw. komplizierte Lösung.

Es ist eine Aufgabe der vorliegenden Erfindung, verbesserte Lösungen zur Messung einer Krafteinwirkung bereitzustellen, bei denen auf die Verwendung eines Ladungsverstärkers verzichtet werden kann.

Diese Aufgabe wird durch ein Verfahren mit den Merkmalen des Anspruchs 1, durch eine Vorrichtung mit den Merkmalen des Anspruchs 8 sowie durch ein Eingabegerät mit den Merkmalen des Anspruchs 9 gelöst. Bevorzugte Ausgestaltungen der Erfindung sind Gegenstand der abhängigen Ansprüche.

Gemäß einem ersten Aspekt der Erfindung umfasst ein Verfahren zur Messung einer Krafteinwirkung die Schritte:
- Erfassen einer aus einer Krafteinwirkung resultierenden Ausgangsspannung eines Kraftsensors; und
- Integrieren der Ausgangsspannung, solange die Ausgangsspannung außerhalb von definierten Schwellenwerten liegt.

Gemäß einem weiteren Aspekt der Erfindung weist eine Vorrichtung zur Messung einer Krafteinwirkung eine Auswerteeinheit auf, die eingerichtet ist, die folgenden Schritte auszuführen:
- Erfassen einer aus einer Krafteinwirkung resultierenden Ausgangsspannung eines Kraftsensors; und
- Integrieren der Ausgangsspannung, solange die Ausgangsspannung außerhalb von definierten Schwellenwerten liegt.

Bei der erfindungsgemäßen Lösung werden die Ladungsverschiebung eines Kraftsensors, d.h. der dynamische Prozess der Betätigung des Kraftsensors, in eine dynamische Spannung gewandelt und diese in einer Auswerteeinheit mathematisch über eine bestimmte Zeit integriert. Solange keine Berührung bzw. Betätigung der Bedienoberfläche stattfindet, verursachen mechanische Vibrationen einer Bedienoberfläche des Kraftsensors kleine Spannungsänderungen, d.h. Rauschen. Diese Spannungsänderungen liegen innerhalb von zuvor definierten Schwellenwerten, so dass bei der Integration lediglich Werte berücksichtigt werden, die außerhalb dieser Schwellenwerte liegen. Ein Ladungsverstärker wird zur Messung der Krafteinwirkung nicht benötigt.

Gemäß einem Aspekt der Erfindung umfasst das Integrieren der Ausgangsspannung:
- Abtasten der Ausgangsspannung; und
- Summieren von Abtastwerten der Ausgangsspannung.

Die Ausgangsspannung kann z.B. von einem Mikrocontroller über dessen ADC-Eingang (ADC: Analog-to-Digital Converter; Analog-Digital-Wandler) erfasst und ausgewertet werden. Die Integration der Ausgangsspannung wird dann durch eine einfache Summation der Abtastwerte realisiert.

Gemäß einem Aspekt der Erfindung ist ein Zeitraster für das Abtasten einstellbar. Beispielsweise kann das Zeitraster an eine übliche Dauer der Betätigung des Kraftsensors angepasst werden. Erfolgt beispielsweise üblicherweise nur eine kurze Betätigung, kann eine vergleichsweise hohe Abtastrate genutzt werden, bei einer üblicherweise langen Betätigung hingegen eine vergleichsweise niedrige Abtastrate. Auf diese Weise kann die Summe der Abtastwerte in einem gewünschten Wertebereich gehalten werden.

Gemäß einem Aspekt der Erfindung wird die erfasste Ausgangsspannung einer Verstärkung unterzogen. Zu diesem Zweck kann ein einfacher Messverstärker verwendet werden, z.B. in Form eines Operationsverstärker-ICs (IC: Integrated Circuit; Integrierte Schaltung). Durch die vorherige Verstärkung kann die erfasste Ausgangsspannung in einen für die nachfolgende Signalverarbeitung geeigneten Wertebereich gebracht werden.

Gemäß einem Aspekt der Erfindung sind die Schwellenwerte einstellbar. Dies erlaubt es, die Schwellenwerte an die Umgebungsbedingungen anzupassen. Die Größe des Rauschens kann z.B. abhängig vom Betriebszustand der Maschine sein, in der der Kraftsensor verbaut ist. So treten beispielweise bei einem fahrenden Fortbewegungsmittel größere Vibrationen auf als bei einem im Stillstand befindlichen Fortbewegungsmittel. Dies kann über eine Anpassung der Schwellenwerte kompensiert werden. Für die Anpassung der Schwellenwerte kann bei Bedarf auf die Daten zusätzlicher Sensoren zurückgegriffen werden, aus denen sich beispielsweise der Betriebszustand ermitteln lässt.

Gemäß einem Aspekt der Erfindung wird durch Auswerten des Integrals der Ausgangsspannung eine Nutzereingabe bestimmt. Das Integral der Ausgangsspannung bzw. der beim Summieren der Abtastwerte bestimmte Summenwert liefert einen Zahlenwert, der proportional zur Dehnung bzw. Entspannung der Bedienoberfläche ist. Aus dem Integral lässt sich somit bestimmen, ob z.B. eine Taste gedrückt oder losgelassen wurde.

Gemäß einem Aspekt der Erfindung ist der Kraftsensor ein piezoelektrischer Sensor oder ein elektrodynamischer Sensor. Ein piezoelektrischer Sensor erlaubt die Erfassung einer Krafteinwirkung nahezu ohne eine mechanische Verformung, was insbesondere für Anwendungen im Automobilbereich vorteilhaft ist. Anstelle eines piezoelektrischen Sensors können alternativ auch elektrodynamische Sensoren verwendet werden.

Gemäß einem Aspekt der Erfindung liegt eine Elektrode des Kraftsensors an einem Masse-Potential. Dies erlaubt es, elektrische Störeinflüsse zu minimieren.

Vorzugsweise wird eine erfindungsgemäße Lösung in einer Maschine genutzt, z.B. in einem Fortbewegungsmittel, einer Industriemaschine oder einem Haushaltsgerät. Bei dem Fortbewegungsmittel kann es sich beispielsweise um ein Kraftfahrzeug, ein Luftfahrzeug, ein Schienenfahrzeug oder ein Wasserfahrzeug handeln.

Weitere Merkmale der vorliegenden Erfindung werden aus der nachfolgenden Beschreibung und den angehängten Ansprüchen in Verbindung mit den Figuren ersichtlich.

Figurenübersicht
- Fig. 1: zeigt schematisch ein Verfahren zur Messung einer Krafteinwirkung;
- Fig. 2: zeigt schematisch eine Vorrichtung zur Messung einer Krafteinwirkung;
- Fig. 3: veranschaulicht den Aufbau einer Messeinrichtung, die eine erfindungsgemäße Lösung nutzt;
- Fig. 4: veranschaulicht die Auswertung des Sensorsignals eines Kraftsensors;
- Fig. 5: zeigt schematisch ein Eingabegerät, das eine erfindungsgemäße Lösung nutzt; und
- Fig. 6: zeigt schematisch eine Maschine mit einem erfindungsgemäßen Eingabegerät.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

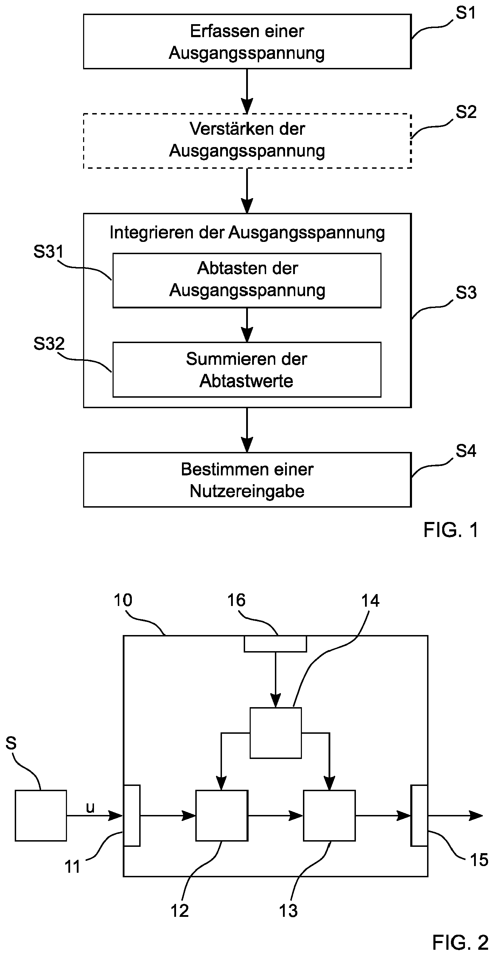

Fig. 1 zeigt schematisch ein Verfahren zur Messung einer Krafteinwirkung. In einem ersten Schritt wird eine aus einer Krafteinwirkung resultierende Ausgangsspannung eines Kraftsensors erfasst S1, z.B. eine Betätigung einer Bedienoberfläche. Der Kraftsensor kann z.B. ein piezoelektrischer Sensor oder ein elektrodynamischer Sensor sein. Diese Ausgangsspannung kann zunächst einer Verstärkung unterzogen werden S2. Die Ausgangsspannung wird integriert S3, solange die Ausgangsspannung außerhalb von definierten Schwellenwerten liegt. Die Schwellenwerte sind vorzugsweise einstellbar. Das Integrieren S3 der Ausgangsspannung kann derart realisiert sein, dass die Ausgangsspannung abgetastet wird S31 und die Abtastwerte summiert werden S32. Ein Zeitraster für das Abtasten kann dabei einstellbar sein. Durch Auswerten des Integrals der Ausgangsspannung kann schließlich eine Nutzereingabe bestimmt werden S4.

Fig. 2 zeigt eine vereinfachte schematische Darstellung einer Vorrichtung 10 zur Messung einer Krafteinwirkung. Die Vorrichtung 10 hat einen Eingang 11, über den eine aus einer Krafteinwirkung resultierenden Ausgangsspannung u eines Kraftsensors S empfangen werden kann. Alternativ kann der Kraftsensor S auch Bestandteil der Vorrichtung 10 sein. Der Kraftsensor S kann z.B. ein piezoelektrischer Sensor oder ein elektrodynamischer Sensor sein. Ein optionaler Verstärker 12 ist eingerichtet, die Ausgangsspannung u zu verstärken. Eine Auswerteeinheit 13 ist eingerichtet, die aus der Krafteinwirkung resultierende Ausgangsspannung u zu erfassen und sie zu integrieren, solange die Ausgangsspannung u außerhalb von definierten Schwellenwerten liegt. Die Schwellenwerte sind vorzugsweise einstellbar. Zum Integrieren der Ausgangsspannung kann die Auswerteeinheit 13 eingerichtet sein, die Ausgangsspannung abzutasten und die Abtastwerte zu summieren. Ein Zeitraster für das Abtasten kann dabei einstellbar sein. Die Auswerteeinheit 13 kann darüber hinaus eingerichtet sein, durch Auswerten des Integrals der Ausgangsspannung u eine Nutzereingabe zu bestimmen. Informationen zur bestimmten Nutzereingabe können dann über einen Ausgang 15 der Vorrichtung 10 ausgegeben werden. Der Verstärker 12 und die Auswerteeinheit 13 können gegebenenfalls von einem Kontrollmodul 14 gesteuert werden. Es kann zudem eine Schnittstelle 16 vorgesehen sein, über die Einstellungen des Verstärkers 12, der Auswerteeinheit 13 oder des Kontrollmoduls 14 geändert werden können.

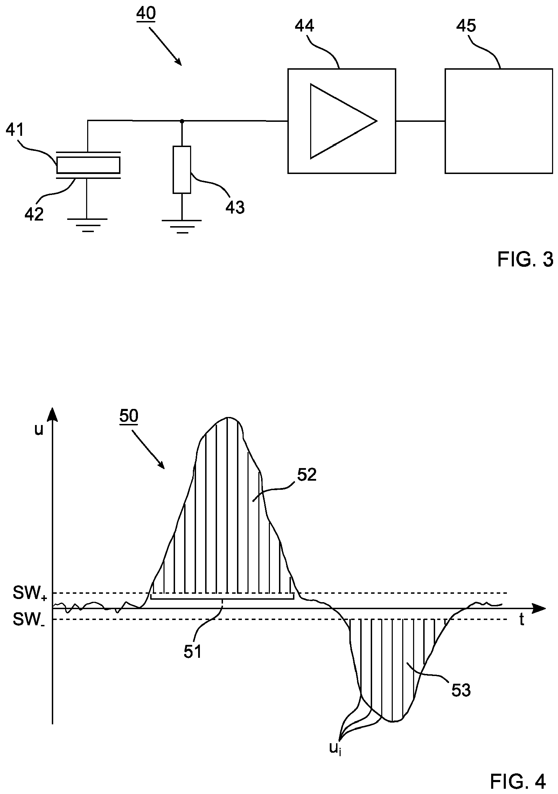

Fig. 3 veranschaulicht den Aufbau einer Messeinrichtung 40, die eine erfindungsgemäße Lösung nutzt. Bei der Dehnung, die durch die Krafteinwirkung des Betätigungsfingers auf eine befestigten Bedienoberfläche bewirkt wird, handelt es sich um einen dynamischen Prozess mit einer bestimmten Bandbreite. Extrem langsame oder schnelle Betätigungen durch einen Finger haben ihre Grenzen. Im dargestellten Beispiel wird ein piezoelektrischer Sensor 41 verwendet. Um elektrische Störeinflüsse zu minimieren, liegt eine Elektrode 42 des piezoelektrischen Sensors 41 am Masse-Potential. Bei Verformung bzw. Entlastung des piezoelektrischen Sensors 41 entsteht eine positive bzw. negative Ladungsverschiebung, die einen Stromfluss über einen Entladewiderstand 43 bewirkt, bis der Landungsausgleich abgeschlossen ist. Dies hat eine Spannung am Entladewiderstand 43 zur Folge, die über einen einfachen Messverstärker 44, z.B. in Form eines Operationsverstärker-ICs, verstärkt wird. Der dynamische Prozess der Betätigung bzw. der Dehnung und Entspannung der Oberfläche wird somit in eine dynamische Spannung gewandelt, die z.B. von einem Mikrocontroller 45 über dessen ADC-Eingang erfasst und ausgewertet werden kann.

Fig. 4 veranschaulicht die Auswertung des Sensorsignals eines Kraftsensors. Dargestellt ist ein beispielhafter Verlauf 50 der Spannung u über die Zeit t bei einem Betätigungsvorgang bzw. der Verlauf der entsprechenden Abtastwerte uᵢ der Auswerteeinheit. Solange keine Berührung bzw. Betätigung der Bedienoberfläche stattfindet, verursachen mechanische Vibrationen der Bedienoberfläche eine Dehnung und somit kleine Spannungsänderungen, d.h. Rauschen. Diese Spannungsänderungen liegen innerhalb von zuvor definierten Integrationsschwellen SW+, SW₋. Diese Integrationsschwellen SW+, SW₋ können von der Auswerteeinheit jederzeit den Umgebungsbedingungen angepasst werden. Sobald die Spannung u außerhalb der Integrationsschwellen SW₊, SW₋ liegt, ist von einer Betätigung der Bedienoberfläche auszugehen, und die Auswerteeinheit beginnt damit, in einem zuvor definiertem und jederzeit veränderlichem Zeitraster 51 die Abtastwerte uᵢ der Spannung u aufzusummieren. Das dabei entstehende bestimmte Integral liefert einen Zahlenwert, der proportional zur Dehnung 52 beim Betätigen der Bedienoberfläche bzw. zur Entspannung 53 beim Loslassen der Bedienoberfläche ist.

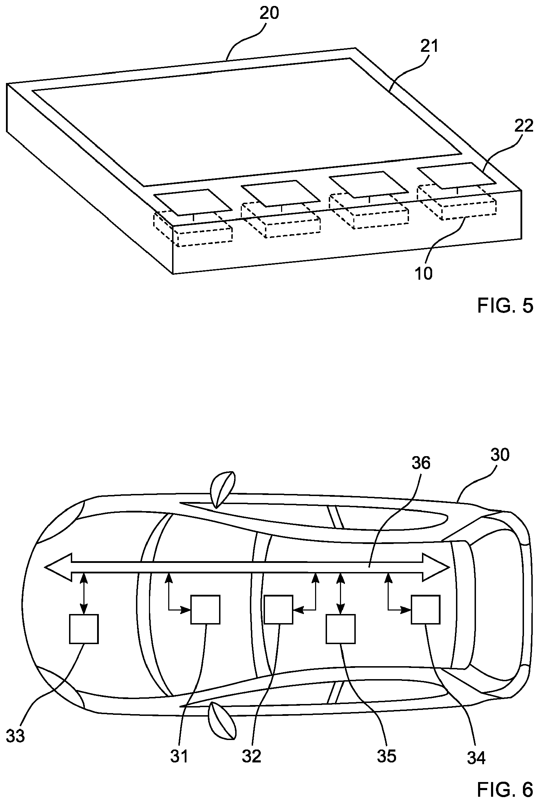

Fig. 5 zeigt schematisch ein Eingabegerät 20, das eine erfindungsgemäße Lösung nutzt. Das Eingabegerät 20 weist ein Display 21 zur Anzeige von Informationen auf. Das Display 21 kann mit einer Touch-Funktion ausgestattet sein. Zusätzlich weist das Eingabegerät 20 mehrere Bedientasten 22 auf, die jeweils einen in Fig. 5 nicht dargestellten piezoelektrischen Sensor zum Erfassen einer Nutzereingabe aufweisen. Die Signale der Bedientasten 22 werden jeweils von einer erfindungsgemäßen Vorrichtung 10 zur Messung einer Krafteinwirkung ausgewertet.

Fig. 6 zeigt schematisch eine Maschine 30, in der eine erfindungsgemäße Lösung realisiert ist. Bei der Maschine 30 handelt es sich in diesem Beispiel um ein Kraftfahrzeug. Das Kraftfahrzeug weist ein erfindungsgemäßes Eingabegerät auf, bei dem es sich in diesem Beispiel um eine berührungsempfindliche Anzeigevorrichtung 31 handelt, die in einer Armaturentafel angeordnet ist. Bei der Anzeigevorrichtung 31 kann es sich beispielsweise um ein Fahrerinformationsdisplay oder ein Zentraldisplay handeln. Ebenso ist eine Verwendung als Innenraumdisplay, Türdisplay oder Beifahrerdisplay möglich. Mit einer Sensorik 32 können Daten zur Fahrzeugumgebung erfasst werden. Die Sensorik 32 kann insbesondere Sensoren zur Umfelderkennung umfassen, z.B. Ultraschallsensoren, Laserscanner, Radarsensoren, Lidarsensoren oder Kameras. Die von der Sensorik 32 erfassten Informationen können genutzt werden, um anzuzeigende Inhalte für die Anzeigevorrichtung 31 zu generieren. Weitere Bestandteile des Kraftfahrzeugs sind in diesem Beispiel ein Navigationssystem 33, durch das Positionsinformationen bereitgestellt werden können, sowie eine Datenübertragungseinheit 34. Mittels der Datenübertragungseinheit 34 kann z.B. eine Verbindung zu einem Backend aufgebaut werden, beispielsweise um aktualisierte Software für Komponenten des Kraftfahrzeugs zu beziehen. Zur Speicherung von Daten ist ein Speicher 35 vorhanden. Der Datenaustausch zwischen den verschiedenen Komponenten des Kraftfahrzeugs erfolgt über ein Netzwerk 36.

### Bezugszeichenliste

- 10: Vorrichtung
- 11: Eingang
- 12: Verstärker
- 13: Auswerteeinheit
- 14: Kontrollmodul
- 15: Ausgang
- 16: Schnittstelle

- 20: Eingabegerät
- 21: Display
- 22: Bedientaste

- 30: Maschine
- 31: Anzeigevorrichtung
- 32: Sensorik
- 33: Navigationssystem
- 34: Datenübertragungseinheit
- 35: Speicher
- 36: Netzwerk

- 40: Messeinrichtung
- 41: Piezoelektrischer Sensor
- 42: Elektrode
- 43: Entladewiderstand
- 44: Messverstärker
- 45: Mikrocontroller

- 50: Spannungsverlauf
- 51: Zeitraster
- 52: Dehnung
- 53: Entspannung

- S: Kraftsensor
- SW+, SW₋: Schwellenwert
- t: Zeit
- u: Ausgangsspannung
- uᵢ: Abtastwert

- S1: Erfassen einer Ausgangsspannung
- S2: Verstärken der Ausgangsspannung
- S3: Integrieren der Ausgangsspannung
- S31: Abtasten der Ausgangsspannung
- S32: Summieren der Abtastwerte
- S4: Bestimmt einer Nutzereingabe

## Patentansprüche

1. Verfahren zur Messung einer Krafteinwirkung, mit den Schritten:
- Erfassen (S1) einer aus einer Krafteinwirkung resultierenden Ausgangsspannung (u) eines Kraftsensors (S); und
- Integrieren (S3) der Ausgangsspannung (u), solange die Ausgangsspannung (u) außerhalb von definierten Schwellenwerten (SW+, SW-) liegt.

2. Verfahren gemäß Anspruch 1, wobei das Integrieren (S3) der Ausgangsspannung (u) umfasst:
- Abtasten (S31) der Ausgangsspannung (u); und
- Summieren (S32) von Abtastwerten (uᵢ) der Ausgangsspannung (u).

3. Verfahren gemäß Anspruch 2, wobei ein Zeitraster (51) für das Abtasten (S31) einstellbar ist.

4. Verfahren gemäß einem der vorherigen Ansprüche, wobei die erfasste Ausgangsspannung (u) einer Verstärkung unterzogen wird (S2).

5. Verfahren gemäß einem der vorherigen Ansprüche, wobei die Schwellenwerte (SW+, SW-) einstellbar sind.

6. Verfahren gemäß einem der vorherigen Ansprüche, wobei durch Auswerten des Integrals der Ausgangsspannung eine Nutzereingabe bestimmt wird (S4).

7. Verfahren gemäß einem der vorherigen Ansprüche, wobei der Kraftsensor (S) ein piezoelektrischer Sensor (41) oder ein elektrodynamischer Sensor ist.

8. Vorrichtung (10) zur Messung einer Krafteinwirkung, wobei die Vorrichtung (10) eine Auswerteeinheit (13) aufweist, die eingerichtet ist, die folgenden Schritte auszuführen:
- Erfassen (S1) einer aus einer Krafteinwirkung resultierenden Ausgangsspannung (u) eines Kraftsensors (S); und
- Integrieren (S3) der Ausgangsspannung (u), solange die Ausgangsspannung (u) außerhalb von definierten Schwellenwerten (SW+, SW-) liegt.

9. Eingabegerät (20), wobei das Eingabegerät (20) eine Vorrichtung (10) gemäß Anspruch 8 aufweist oder eingerichtet ist, ein Verfahren gemäß einem der Ansprüche 1 bis 7 zur Messung einer Krafteinwirkung auszuführen.

10. Eingabegerät (20) gemäß Anspruch 9, wobei das Eingabegerät (20) eine berührungsempfindliche Anzeigevorrichtung (31) ist.
